# EUROPEAN PATENT APPLICATION

(11) **EP 2 471 362 A1**
(43) Date of publication of application: **04.07.2012**
(21) Application number: 10811311.9
(22) Date of filing: 14.06.2010
(51) Int. Cl.: A01N 25/12, A01N 25/04

(54) **STRENGTHENING COMPOSITION THAT REGULATES TRANSPIRATION AND PROTECTS LEAVES AND FRUITS, AND USE THEREOF**

(30) Priority: 28.08.2009 ES 200930638
(71) Applicant: FMC Foret S.A., 08006 Barcelona (ES)
(72) Inventor: ARTIGAS PUERTO, Ramón, E-08174 San Cugat del Valles (Barcelona) (ES)
(74) Representative: Durán-Corretjer, S.L.P.
(86) International application number: PCT/ES2010/000260
(87) International publication number: WO 2011/023835

(57) **Abstract**

The invention relates to the field of agriculture and, in particular, to products for improving agricultural crop yields. More specifically, the present invention relates to a strengthening composition that regulates transpiration and protects leaves and fruits, said composition containing zeolite as a base, preferably zeolite 4A, and other additives which boost the activity thereof and facilitate the application of same in an aqueous suspension or dry. In addition, the invention relates to the different uses of said composition.

## Description

The present invention relates to the agricultural sector, and more particularly to products for improving the yield of the production of agricultural crops. More specifically, the present invention concerns a strengthening composition regulating transpiration, protecting leaves and fruit, and which comprises zeolite, preferably zeolite 4A, as a base and other additives, which boost its activity and facilitate its application in aqueous suspension or in the dry state. In addition, the present invention concerns the different uses of the composition.

It is well known that the world population is rapidly increasing. In order to satisfy world demand for food, it is necessary to increase the yield of crops, especially of cereals, such as maize, rice, wheat, soya, barley and sorghum. Thus, in the specific case of rice, it is estimated that an increase in yield of 50% will be required by the year 2030.

Since the middle of the last century, work has been carried out on optimising the management of the various crops. In recent decades, the use of fertilizers and genetic improvements have produced a substantial increase in the yield of the majority of crops on a world scale. In spite of this, the land available for many crops has reached its maximum value. In addition, another problem of enormous relevance with regard to increasing the production of crops is the low availability of water for irrigation, which limits both photosynthesis and the growth of the plants.

Another problem, no less important, relating to the increase in agricultural production, lies in the many pests and diseases which affect the crops. In order to combat these, products are often used which are intrinsically toxic and have a negative effect on the various ecosystems.

Therefore there is a need to obtain a product which helps to solve the aforesaid problems relating to increasing the yield of the crops and the efficient use of water, and which, in an environmentally friendly manner, helps to eliminate pests and diseases which affect the crops.

The present inventors have developed a composition which comprises zeolite 4A as a base and other additives which boost its activity and facilitate its application in aqueous suspension or in the dry state.

Surprisingly, by the application of the composition of the present invention to numerous crops, an improvement in the yield of the treated crop has been obtained, by favouring photosynthetic activity, which causes an increase both in the leaf surface area and in the weight of the fruit.

Other beneficial effects on the crops, as a result of the application of the composition of the present invention, are a reduction in fungal activity, the absorption of some mycotoxins, the reduction in attacks by insects and other pathogenic agents and the most efficient use of water which is used for irrigation.

Photosynthesis is the process by which organisms with chlorophyll, such as green plants, algae and some bacteria, capture light energy from the visible spectrum and transform it into chemical energy, which they use in the synthesis of carbohydrates. The general equation for the photosynthesis used by the majority of organisms with chlorophyll is:

6CO₂ + 6H₂O + light -> C₆H₁₂O₆ + 6O₂

The process of photosynthesis takes place in two stages: the first, termed the photodependent stage, which occurs only in the presence of light, and the second, termed the biochemical stage or Calvin cycle, occurs independently of light.

The Calvin cycle occurs in the stroma or matrix of the chloroplast. The necessary enzymes are to be found there which catalyze the conversion of carbon dioxide (CO₂) into glucose by using the protons provided by the coenzyme NADPH (nicotinamide adenine dinucleotide hydrogen phosphate) plus the energy of ATP (adenosine triphosphate). The carbon dioxide enters through the stomas and reaches the acceptor molecule of the cycle, a pentose termed ribulose diphosphate, combining with this by means of the action of the enzyme ribulose 1,5-biphosphate carboxylase oxygenase or Rubisco. The first stable product of the fixing of CO₂ is 3-phosphoglyceric acid (PGA), a compound with 3 carbons. The energy of the ATP is used to phosphorylate the PGA and form 1,3-diphosphoglyceric acid, which is then reduced by means of the action of NADPH to glyceraldehyde-3-phosphate (PGAL). A part of the glyceraldehyde-3-phosphate is used in the cycle to synthesize glucose, while the rest is used for regenerating ribulose, which gives rise to a new cycle.

Paradoxically, CO₂ is not a gas which is very abundant in the atmosphere, since it constitutes approximately 0.03% thereof, so that it is not easy for plants to obtain it. This difficulty is aggravated by the fact that the gaseous interchange can only take place through diminutive pores, termed stomas, which are usually concentrated on the lower faces of the leaves. The stomas open and close in response to environmental factors such as environmental humidity or the intensity of the light. In hot, dry conditions, the stomas close in order to reduce the loss of water vapour and, as a result, the supply of carbon dioxide is reduced to a great degree. That is, the CO₂ is less readily available at the times when the maximum solar intensity is available for promoting the reactions of the luminous phase of photosynthesis.

It is for this reason that many vegetable species which grow in hot, dry environments, termed C4 and CAM, have developed adaptations of the photosynthetic mechanism previously described, which is possessed by the great majority of plants in damp, temperate environments (termed C3), which allow them to fix CO₂ initially with a minimum loss of water.

Without intending to be associated with any specific theory, it is possible that, by the application of the composition of the present invention, one or more mechanisms are facilitated which are directly or indirectly related to the photosynthetic activity of the plants.

The application of the composition of the present invention to the plants causes a coating to be formed which acts as a thermally insulating and reflective covering, which reduces the exposure temperature and limits the UV radiation harmful to vegetal growth effectively during the hours of greatest sunshine. This leads to a lesser water loss through transpiration, so that the stomas remain open for a longer time, facilitating the admission of CO₂. But, in addition, the physico-chemical characteristics of the composition of the present invention favour the concentration of CO₂ in the interphase with the vegetal epidermis connected to the mesophyll, which results in greater efficiency of the reaction of the enzyme rubisco, since it has more substrate available and in more soluble conditions. In other words, surprisingly, it has been found that, due to the application of the composition of the present invention, a type C3 plant functions as if it had at its disposal a CO₂ preconcentrating system similar to that of type C4 plants.

Unexpectedly, the present inventors observed, in addition, that type C4 crops, such as maize, which already have natural CO₂ preconcentration mechanisms available, are also favoured by the application of the composition of the present invention, increasing the leaf surface area and reducing the water consumption of the plants.

As mentioned previously, the composition of the present invention comprises zeolite 4A as a base and other additives which boost its activity and facilitate its application in aqueous suspension or in the dry state.

Zeolite 4A (Z4A) is a hydrated crystalline sodium aluminosilicate having the composition Na₁₂(AlO₂)12(SiO₂)12.27H₂O. It is obtained industrially from sand (SiO₂), alumina (Al₂O₃ 3H₂O) and caustic soda (NaOH at 50%). The sand and alumina are digested separately with caustic soda, obtaining sodium silicate and sodium aluminates, which are afterwards reacted, forming an amorphous sodium aluminosilicate which, subjected to suitable maturation conditions, rearranges itself to adopt the crystalline structure of Z4A. For example, European Patent EP0525272 describes a process and a device for obtaining zeolite 4A.

From a macroscopic viewpoint, Z4A is a white solid, insoluble in water, with an average particle size between 2 and 5 microns. It has excellent cation sequestrating properties, owing to the ease with which it interchanges its sodium ions in an aqueous medium. For this reason it has been widely used in the detergent field because of its capacity for reducing the hardness of water in the washing process.

Z4A, the element ratio Si:Al:Na of which is 1:1:1, has one of the most heterogenous surfaces known in porous materials, since the Si and Al atoms occupy alternate positions in its tetrahedral arrangement. This results in great selectivity with regard to the molecules of water and to those of the polar kinds, such as CO₂.

Z4A is also used as a molecular sieve because of its uniform pore size. This effect is intensified when heated under vacuum or in a stream of gas (N₂, He, air), since it loses crystallisation water without modifying its crystalline structure, which, together with its considerable internal surface area (600-900 m²/g) permits its application in the drying of gases and liquids, in a reversible process and in the separation and purification of gaseous and liquid mixtures.

Z4A is a thixotropic product, which means in practice that at rest it is capable of retaining an amount of water much greater than that of crystallisation. In any case, dehydration and rehydration occur easily owing to the fact that the water is weakly retained in the structures.

Z4A can adsorb a great variety of substances, such as CO₂, NH₃ and organic compounds such as mycotoxins.

In addition, the whiteness and fineness of Z4A suggest its application as a protective reflective film against solar radiation, whether as a thermal aid or as a selective UV filter. It has been demonstrated by means of spectrophotometry that Z4A absorbs in the UVB range owing to a dispersion effect.

A very important characteristic of Z4A is that it has no harmful environmental effects and may be regarded as ecologically safe.

The composition of the present invention comprises as a base preferably zeolite 4A, but it is obvious to a person skilled in the art that any zeolite which has physico-chemical characteristics similar to zeolite 4A, principally with regard to the capacity for adsorption of CO₂ and H₂O, and particle size distribution, is suitable for use in the composition of the present invention.

Preferably, in the composition of the present invention, Z4A is used because it is a product of synthesis, of controlled and repeatable composition, so that its use eliminates the customary inconsistencies deriving from the use of natural products, which are subject to great variability and may be accompanied by other compounds which could interfere in the principal function to be performed.

The composition of the present invention comprises from 95% to 99.9% of zeolite 4A by weight and from 0.1% to 5% of other additives which impart to it improved characteristics of fluidity in the dry state and dispersibility in an aqueous medium.

Said additives employed in the formulation of the present invention do not belong to the same chemical family and have a variable dispersion effect. Among the additives suitable for use in the composition of the present invention are acrylic homopolymers or copolymers in aqueous dispersion or the salts thereof, such as the commercially available Rheosolve 7098 (Coatex, France) or Acumer^{™} (Rohm and Haas, United States); or sodium lignosulphate, such as the commercially available Borresperse CA (Borregaard Industries Ltd., Norway); or mixtures of components such as sodium diisopropylnaphthalene sulphonate, naphthalenesulphonic acid and ethoxylated primary alcohols, such as the commercially available Neodol (Shell Chemicals Iberica, Spain). Preferably, in the composition of the present invention, Rheosolve 7098 is used. The concentration of said additives in the composition of the present invention is from 0.1% to 5% by weight, more preferably from 0.2% to 3% by weight, and most preferably 0.5% by weight, with respect to the total weight of the composition.

Besides the additives mentioned previously, the composition of the present invention may additionally comprise, if wished, additives which increase the surface adhesion of the composition on the leaves and fruit. Examples of these additives are nonionic humectants such as solutions of ethoxylated isodecyl alcohol, such as the commercially available Mogiol^{(R)} (Comercial Quimica Masso, Spain).

The composition of the present invention may be in the form of a fine powder or in the form of an aqueous dispersion. The additives which this composition comprise significantly facilitate its application by sprinkling, in the case of the composition in powder form, or by spraying in the case where it is in the form of an aqueous dispersion. Likewise, said additives help to increase the persistence of the composition on the surfaces of the treated crops.

The composition of the present invention can be applied both to crops in the open air and to crops in glasshouses.

The composition of the present invention may be applied in order to combat fungi and fungal diseases which affect plants. At low temperatures and high relative humidity, conditions existing in the spring or rainy autumns and in glasshouses, water is condensed on the leaves and fruit, when it reaches the dewpoint. The composition of the present invention acts as a drying agent, since it has a high capacity for water absorption, which prevents fungal activity, both on the surface of the plants and on that of the ectoparasitic fungus Oidium, and that of the endoparasitic fungi Mildew and Botritis.

Another beneficial effect of the application of the composition of the present invention is the masking of leaves and fruit, which may be the subject of attack by insects, mites and opportunistic pathogens which infect the crops via the wounds caused by said insects. It is known that the insects act guided by chromatic, olphatic and textural parameters. The composition of the present invention alters the colour and texture of the parts which it covers and, also, in some cases can capture odoriferous compounds secreted by the plant. In addition, the composition according to the present invention causes surface drying of the moist coating of the eggs of said insects, which renders their gaseous interchange (respiration) difficult, thus limiting their viability. The composition according to the present invention proves effective against white fly and the *Tuta absoluta* moth, which are very resistant to treatments using customary insecticides.

The present invention is described in more detail hereinafter on the basis of an example, which does not constitute any limitation of the scope of the present invention.

### EXAMPLE

A composition was prepared which contained 99.5% of zeolite 4A and 0.5% of Rheosolve 7098 in the form of an aqueous suspension. The composition was applied by means of spraying to a growth in pots of strawberries and to a crop of maize, every 15 days, with doses equivalent to 30 and 15 kg/hectare (1 g/plant/15 days) respectively. The results obtained in comparison with similar untreated crops at the end of the harvest are shown in Table I.

As a result of the application of the composition, advanced flowering/fruiting was observed, as well as an increase in fruit production, and in the quality of the parts of the fruits. In addition, a notable improvement was observed in the leaf development and more efficient use of water.

Table I. Results of the application to crops of a composition which comprises zeolite 4A (99.5%) and Rheosolve 7098 (0.5%).

| Crop | Type | Dose (kg/ha) | Increase in the leaf production | Efficient use of water ** (%) | Increased production (%) |
|---|---|---|---|---|---|
| Strawberry | C3 | 30* | +70 | +50 | +42 |
| Maize | C4 | 15 | +20 | +50 | +20 |
| *30000 plants per hectare | | | | | |
| ** Dry material vs. evaporation by transpiration | | | | | |

Although the invention has been described with respect to a preferred exemplary embodiment, this should not be regarded as limiting the invention, which will be defined by the widest possible interpretation of the following claims.

## Claims

1. Composition for the application to agricultural crops in the open air or in glasshouses which has properties regulating vegetal transpiration and protecting leaves and fruit, **characterized in that** it comprises from 95% to 99.9% by weight of zeolite and from 0.1% to 5% by weight of additives which impart to it improved characteristics of fluidity in the dry state and dispersibility in an aqueous medium.

2. Composition according to claim 1, **characterized in that** the zeolite is zeolite 4A.

3. Composition according to claim 1 or 2, **characterized in that** said additives are acrylic homopolymers or copolymers in an aqueous dispersion or the salts thereof or sodium lignosulphate, or mixtures of components such as sodium diisopropylnaphthalene sulphonate, naphthalenesulphonic acid and ethoxylated primary alcohols.

4. Composition according to any one of the preceding claims, **characterized in that** the additive is an acrylic copolymer in an aqueous dispersion, such as Rheosolve 7098.

5. Composition according to any one of the preceding claims, **characterized in that** the concentration of said additives in the composition of the present invention is from 0.2% to 3% by weight, with respect to the total weight of the composition.

6. Composition according to any one of the preceding claims, **characterized in that** the concentration of said additives in the composition of the present invention is 0.5% by weight, with respect to the total weight of the composition.

7. Composition according to any one of the preceding claims, **characterized in that** it additionally comprises additives which increase the surface adhesion of the composition on the leaves and fruit.

8. Composition according to claim 7, **characterized in that** said additive which increases the surface adhesion on the leaves and fruit is a solution of ethoxylated isodecyl alcohol, such as Mogiol ®.

9. Composition according to any one of the preceding claims, **characterized in that** the composition is in the form of a powder.

10. Composition according to any one of the preceding claims, **characterized in that** the composition is in the form of an aqueous dispersion.

11. Use of a composition according to claims 1 to 10, for increasing the yield of agricultural crops by more efficient use of the water for irrigation.

12. Use of a composition according to claims 1 to 10, for combating ectoparasitic and endoparasitic fungi and the fungal diseases of plants associated therewith.

13. Use according to claim 12, **characterized in that** said fungi are Oidium, Mildew and Botritis.

14. Use of a composition according to claims 1 to 10, as protection for plants against attack by insects and mites.

15. Use according to claim 14, **characterized in that** said insects are white fly and the *Tuta absoluta* moth.

16. Use of a composition according to claims 1 to 10, for reducing the viability of the eggs of insects deposited on the leaves and fruit of the crops.

17. Use of a composition according to claims 1 to 10, for increasing the concentration of CO₂ on the interphase with the vegetal epidermis connected to the mesophyll of the crops, especially those of type C3, consequently increasing the efficiency of the enzyme Rubisco.
